# EUROPEAN PATENT SPECIFICATION

(11) **EP 2 276 900 B1**
(45) Date of publication and mention of the grant of the patent: **08.05.2019**
(21) Application number: 07834622.8
(22) Date of filing: 04.10.2007
(51) Int. Cl.: A62B 1/04, E04G 21/32, F16G 11/00, A62B 35/04, F16F 1/376

(54) **ANCHOR POINT**
ANKERPUNKT
POINT D'ANCRAGE

(30) Priority: 04.10.2006 NL 1032628
(43) Date of publication of application: 26.01.2011
(73) Proprietor: XSPlatforms Holding B.V., 4206 Gorinchem (NL)
(72) Inventor: COX, Gerardus, Antonie, Martinus, Maria, NL-5691 SR Son (NL)
(74) Representative: Verhees, Godefridus Josephus Maria
(86) International application number: PCT/NL2007/050484
(87) International publication number: WO 2008/041851

(56) References cited:
- EP-A- 0 212 826
- WO-A-03/039680
- GB-A- 2 011 970
- GB-A- 2 351 789
- GB-A- 2 354 052
- JP-A- 2000 346 113
- US-A1- 2004 010 993

## Description

### BACKGROUND OF THE INVENTION:

### Field of the invention

The invention relates to an anchor point, in particular for anchoring a cable on the roof of a building, comprising a foot, as well as a means of absorbing energy that is connected to the foot and is provided with a coupling feature for attaching a coupling element to the means of absorbing energy, which means of absorbing energy comprises an elongated absorbing element that is provided with plates which extend radially. Workers on the roof of a building are mostly fastened to a safety cable which in turn is fixed to an anchor point on the roof. Should a worker fall, the anchor point must absorb the fall as well as the fall's energy.

### Prior art

Such an anchor point is known from GB 2 351 789 A. This known anchor point has two plates near the ends of the elongated absorbing element with a spring in between. The means for absorbing energy are constituted by the spring.

### Summary of the invention

An objective of the invention is to provide an anchor point of the type described in the preamble that is better than the known anchor point. To this end, the anchor point according to the invention is characterized in that the plates are situated axially along the length of the elongated absorbing element at equal distances from each other, which distances are such that at bending of the energy absorbing element the plates will come in contact and slide over each other. Energy absorption takes place here through the bending of the absorbing element and because when bending, the plates of the absorbing element slide over each other. The more the absorbing element bends the more the plates will come in contact and slide over each other. The energy absorbed per unit of time increases because of this and therefore one can speak of a progressive absorption of energy instead of linear as is the case with the known anchor point, as a result of which the energy is absorbed more evenly and a fall is also more evenly absorbed.

It is noticed that from WO 03/039680 A an anchor point is known in which the means of absorbing energy is a cylinder with a piston in it which moves against a large amount of friction. The absorption of energy is here equal to the frictional force times the distance travelled by the piston and is therefore linear over the working distance, whereas the absorption of energy of the anchor point according to the invention is progressive per unit of time.

An embodiment of the anchor point according to the invention is characterized in that the means of absorbing energy, furthermore, comprises a casing that is situated about the absorbing element and is connected to the foot at a first end and at the second end is coupled to an end of the absorbing element. The absorption of energy therefore also takes place through deformation of the casing when the absorbing element bends. Because of this, a slight bending of the absorbing element is directly visible on the outside because of the deformation of the cylinder

Preferably, the casing is attached to the foot at the first end and at the other end is connected to the absorbing element in such a way that it can be detached.

Furthermore, the absorbing element is preferably provided with a screw thread at one end and the foot is provided with an additional screw thread that cooperates with this screw thread.

A further embodiment of the anchor point according to the invention is characterized in that the absorbing element is attached at the other end to a safety device with which the absorbing element is secured to the casing to prevent twisting. Because of this, the absorbing element is prevented from coming loose from the foot.

Still a further embodiment of the anchor point according to the invention is characterized in that the safety device is provided with a locking device for locking it. In this way, opening of the lock by unauthorized persons is prevented.

In order to facilitate attachment of the foot to a roof, the foot comprises a baseplate, which is thicker at its centre and has two aligned holes, one of which has a greater diameter than the other one and is provided with the additional screw thread.

### Brief description of the drawings

The invention will be elucidated more fully below on the basis of drawings in which embodiments of the anchor point according to the invention are shown. In these drawings:
Figure 1 shows a perspective view of the first embodiment of the anchor point according to the invention;
Figure 2 shows a longitudinal section of the anchor point shown in figure 1;
Figure 3 shows a perspective view of the second embodiment of the anchor point according to the invention;
Figure 4 shows a longitudinal section of the anchor point shown in figure 3;
Figure 5 shows a perspective view of the absorbing element with the safety device of the anchor points shown in figures 1-4;
Figure 6 shows a longitudinal section of the absorbing element shown in figure 5.

### Detailed description of the drawings

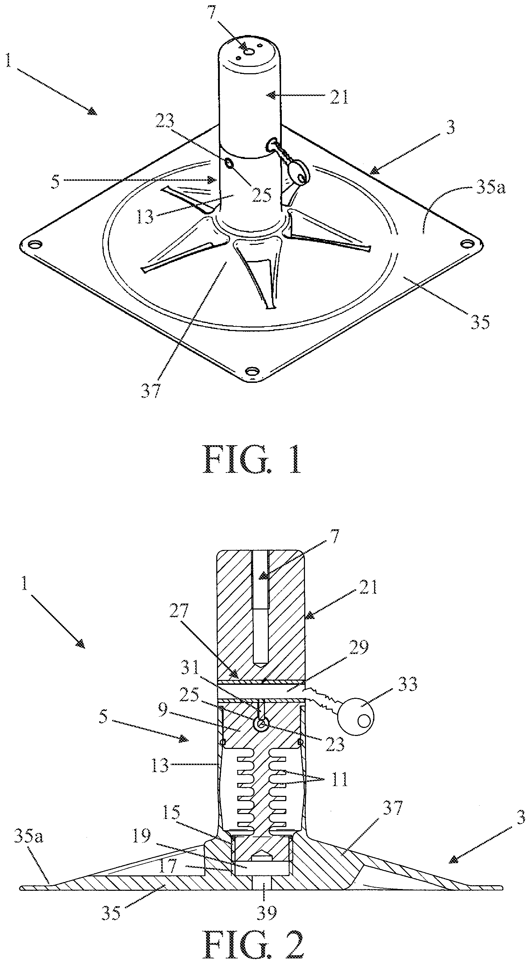

In figures 1 and 2 a perspective view and a longitudinal section of a first embodiment of the anchor point according to the invention is shown. The anchor point 1 has a foot 3, a means of absorbing energy 5 that is connected to the foot and is provided with a coupling feature 7 for attaching a coupling element to the means of absorbing energy. The coupling feature is a hole provided with an internal screw thread in which an eye provided with an outside screw thread can be screwed in.

The means of absorbing energy 3 is an elongated absorbing element 9 provided with plates 11 which extend radially and are axially situated at a distance from each other, and a casing 13 about the absorbing element that at a first end is attached to the foot and is connected at the second end to an end of the absorbing element 9 in such a way that it can be detached. The casing 13 is smaller at its centre than at its ends.

The absorbing element 9 is provided with an outside screw thread 15 that cooperates with an internal screw thread 17 situated in a hole 19 in the foot 3. The absorbing element 9 is attached at the other end to a safety device 21 with which the absorbing element is secured to the casing 13 to prevent twisting. The safety device is a pin 23 that passes through a hole 25 in the casing 13 and the absorbing element 9.

The safety device 21 is provided with a locking device 27 for locking the pin 23 in the absorbing element 9. The locking device 27 has a cylinder lock 29 that can move a blocking peg 31 between a blocking position in which it passes through a hole in the pin 23 and an open position in which it has been removed from the opening. The cylinder lock 29 can be operated by a key 33.

The foot 3 is a baseplate 35 that is thicker at its centre 37. There are two aligned holes 19, 39 situated in the thicker part, of which the hole 19 has a greater diameter than the other hole 39 and is provided with an internal screw thread 17. The hole 39, when the anchor point is mounted on the roof of a building, is placed over a threaded stud fitted in the roof, after which the baseplate is screwed tight to the roof with a nut. The thicker part 37 is on the upper side 35a of the baseplate in this embodiment.

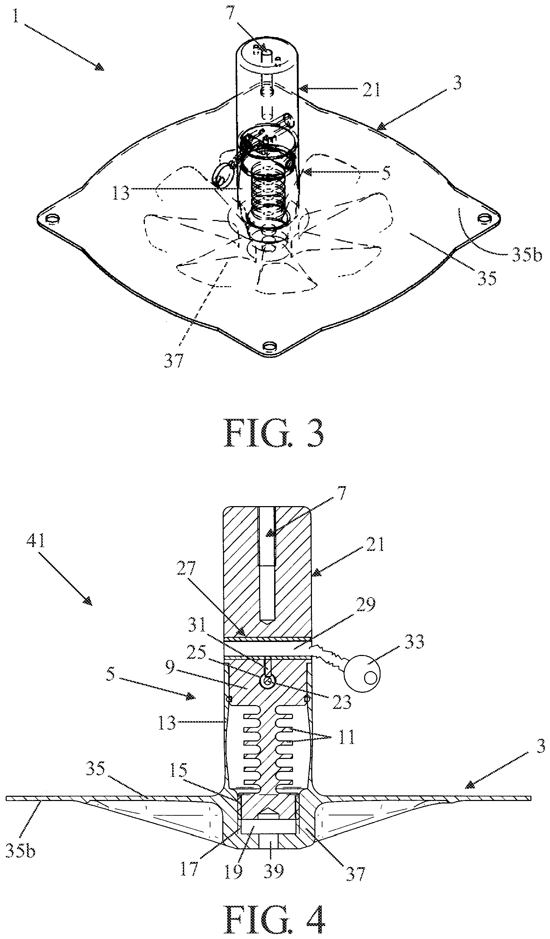

In figures 3 and 4 a perspective view and a longitudinal section of a second embodiment of the anchor point according to the invention are shown respectively. All parts that are the same as or have the same function as those of the first embodiment are indicated with the same reference numbers. With this anchor point 41 the thicker part 37 is on the lower side 35b of the baseplate instead of the upper side. Because of this, the foot 3 of the anchor point 41, after mounting on a roof, is fully sunk into the roof.

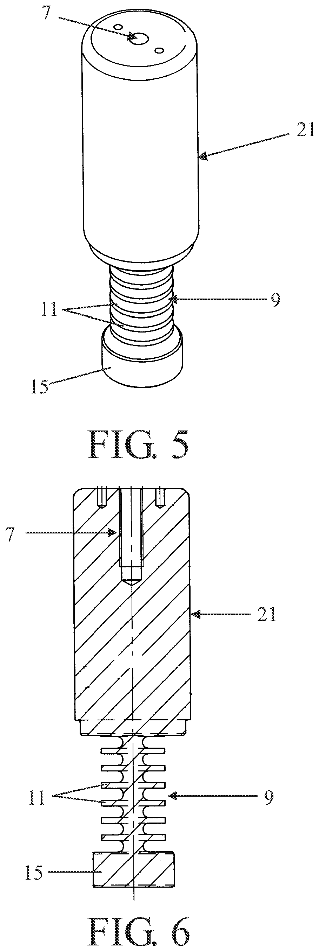

In figures 5 and 6, by way of illustration, the absorbing element 9 with the safety device 21 of the anchor points 1 and 41 shown in figures 1-4 is shown enlarged in a perspective view and a longitudinal section respectively. The absorbing element 9 with the safety device 21 is screwed into the foot after this has been mounted on the roof. After that an eye is screwed into the hole, which is the coupling feature 7, to which a safety cable can be coupled.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Anchor point (1), in particular for anchoring a cable to the roof of a building, comprising a foot (3), as well as a means of absorbing energy (5) that is connected to the foot and is provided with a coupling feature (7) for attaching a coupling element to the means of absorbing energy, which means of absorbing energy (5) comprises an elongated absorbing element (9) that is provided with plates (11) which extend radially, **characterised in that** the plates (11) are situated axially along the length of the elongated absorbing element (9) at equal distances from each other, which distances are such that at bending of the energy absorbing element (9) the plates (11) will come in contact and slide over each other.

2. Anchor point (1) according to claim 1, **characterized in that** the means of absorbing energy (5), furthermore, comprises a casing (13) that is situated about the absorbing element (9) and is connected to the foot (3) at a first end and at the second end is coupled to an end of the absorbing element (9).

3. Anchor point (1) according to claim 2, **characterized in that** the casing (13) is attached to the foot (3) at the first end and at the other second end is connected to an end of the absorbing element (9) in such a way that it can be detached.

4. Anchor point (1) according to claim 1, 2 or 3, **characterized in that** the absorbing element (9) is provided with a screw thread (15) at one end and that the foot (3) is provided with an additional screw thread (17) that cooperates with this screw thread.

5. Anchor point (1) according to claim 2, 3 or 4, **characterized in that** the absorbing element (9) is attached to a safety device (21) at the other end, with which the absorbing element (9) is secured to the casing (13) to prevent twisting.

6. Anchor point (1) according to claim 5, **characterized in that** the safety device (21) is provided with a locking device (27) for locking it.

7. Anchor point (1) according to one of the preceding claims, **characterized in that** the foot (3) comprises a baseplate (35), that is thicker at its centre (37) and is provided with two aligned holes (19, 39), one of which has a greater diameter than the other one and is provided with the additional screw thread (17).

## Patentansprüche

1. Verankerungspunkt (1), insbesondere zur Verankerung eines Kabels am Dach eines Gebäudes, umfassend einen Fuß (3) sowie ein mit dem Fuß verbundenes Mittel zur Aufnahme von Energie (5) mit einem Kopplungsmerkmal (7) zum Befestigen eines Kopplungselements an dem Mittel zum Absorbieren von Energie, das Mittel zum Absorbieren von Energie (5) umfasst ein längliches Absorptionselement (9), das mit Platten (11) versehen ist, die sich radial erstrecken, **dadurch gekennzeichnet, dass** die Platten (11) sich entlang der Länge des länglichen Absorptionselements (9) in gleichen Abständen voneinander erstrecken, wobei diese Abstände derart sind, dass die Platten (11) beim Biegen des Energieabsorptionselements (9) in Kontakt kommen und gegenseitig übergleiten.

2. Ankerpunkt (1) nach Anspruch 1, **dadurch gekennzeichnet, dass** das Mittel zur Energieaufnahme (5) ferner ein Gehäuse (13) umfasst, das um das absorbierende Element (9) herum angeordnet ist und mit dem Fuß (3) an einem ersten Ende gekoppelt ist und am zweiten Ende mit einem Ende des absorbierenden Elements (9) gekoppelt ist.

3. Verankerungspunkt (1) nach Anspruch 2, **dadurch gekennzeichnet, dass** das Gehäuse (13) am ersten Ende am Fuß (3) befestigt ist und am anderen Ende mit einem Ende des Absorptionselementes (9) verbunden ist. so, dass es abgelöst werden kann.

4. Anschlagpunkt (1) nach Anspruch 1, 2 oder 3, **dadurch gekennzeichnet, dass** das Aufnahmeelement (9) an einem Ende mit einem Schraubgewinde (15) versehen ist und dass der Fuß (3) mit einer zusätzlichen Schraube versehen ist Gewinde (17), das mit diesem Schraubengewinde zusammenwirkt.

5. Anschlagpunkt (1) nach Anspruch 2, 3 oder 4, **dadurch gekennzeichnet, dass** das Aufnahmeelement (9) an dem anderen Ende an einer Sicherheitseinrichtung (21) befestigt ist, mit der das Aufnahmeelement (9) am Gehäuse (13) befestigt ist und gegen Verdrehen gesichert ist.

6. Anschlagpunkt (1) nach Anspruch 5, **dadurch gekennzeichnet, dass** die Sicherheitseinrichtung (21) mit einer Verriegelungseinrichtung (27) zum Verriegeln derselben versehen ist.

7. Anschlagpunkt (1) nach einem der vorhergehenden Ansprüche, **dadurch gekennzeichnet, dass** der Fuß (3) eine in seiner Mitte (37) dickere Grundplatte (35) aufweist, die mit zwei fluchtenden Löchern (19, 39, 39) versehen ist, von denen einer einen größeren Durchmesser als der andere hat und mit dem zusätzlichen Schraubengewinde (17) versehen ist.

## Revendications

1. Point d'ancrage (1), en particulier pour ancrer un câble sur le toit d'un bâtiment, comprenant un pied (3), ainsi qu'un moyen d'absorption d'énergie (5) relié au pied et pourvu d'un caractéristique de couplage (7) pour attacher un élément de couplage au moyen d'absorption d'énergie, lequel moyen d'absorption d'énergie (5) comprend un élément absorbant allongé (9) pourvu de plaques (11) qui s'étendent radialement, **caractérisé en ce que** les plaques (11) s'étendent sur la longueur de l'élément absorbant allongé (9) à des distances égales l'une de l'autre, lesquelles distances sont telles qu'au moment de la flexion de l'élément absorbant l'énergie (9), les plaques (11) entrent en contact et glissent l'un et l'autre.

2. Point d'ancrage (1) selon la revendication 1, **caractérisé en ce que** le moyen d'absorption d'énergie (5) comprend en outre un boîtier (13) situé autour de l'élément absorbant (9) et relié au pied (3) à une première extrémité et à la deuxième extrémité est couplée à une extrémité de l'élément absorbant (9).

3. Point d'ancrage (1) selon la revendication 2, **caractérisé en ce que** le boîtier (13) est fixé au pied (3) à la première extrémité et à l'autre seconde extrémité est relié à une extrémité de l'élément absorbant (9) de telle manière qu'il puisse être détaché.

4. Point d'ancrage (1) selon la revendication 1, 2 ou 3, **caractérisé en ce que** l'élément absorbant (9) est pourvu d'un filetage (15) à une extrémité et que le pied (3) est pourvu d'une vis supplémentaire fil (17) qui coopère avec ce filetage.

5. Point d'ancrage (1) selon la revendication 2, 3 ou 4, **caractérisé en ce que** l'élément absorbant (9) est attaché à un dispositif de sécurité (21) à l'autre extrémité avec lequel l'élément absorbant (9) est fixé sur le boîtier (13) pour empêcher la torsion.

6. Point d'ancrage (1) selon la revendication 5, **caractérisé en ce que** le dispositif de sécurité (21) est muni d'un dispositif de verrouillage (27) pour le bloquer.

7. Point d'ancrage (1) selon l'une des revendications précédentes, **caractérisé en ce que** le pied (3) comprend une plaque de base (35) plus épaisse en son centre (37) et munie de deux trous alignés (19, 39) dont l'un a un diamètre plus grand que l'autre et est pourvu du filetage supplémentaire (17).
